# EUROPÄISCHE PATENTSCHRIFT

(11) **EP 0 763 398 B1**
(45) Veröffentlichungstag und Bekanntmachung des Hinweises auf die Patenterteilung: **18.11.1998**
(21) Anmeldenummer: 96250177.1
(22) Anmeldetag: 15.08.1996
(51) Int. Cl.: B23K 11/087, B23K 37/08, B23D 79/02

(54) **Verfahren und Vorrichtung zur Beseitigung eines Stauchgrates**
Process and device for removing a pressure welding upset
Procédé et dispositif pour la suppression d'une bavure de refoulement

(30) Priorität: 14.09.1995 DE 19535574
(43) Veröffentlichungstag der Anmeldung: 19.03.1997
(73) Patentinhaber: MANNESMANN Aktiengesellschaft, 40213 Düsseldorf (DE)
(72) Erfinder: Däfler, Hans-Joachim, 40699 Erkrath (DE); Duning, Ralf, 42719 Solingen (DE); Gohrbrandt, Uwe, 42781 Haan (DE); Tümmler, Helmut, 40723 Hilden (DE)
(74) Vertreter: Presting, Hans-Joachim, Dipl.-Ing.

(56) Entgegenhaltungen:
- AU-B- 450 099
- DE-A- 3 034 243
- DE-C- 459 571
- FR-A- 2 608 481
- US-A- 2 009 670
- US-A- 4 562 326
- US-A- 5 192 013
- PATENT ABSTRACTS OF JAPAN vol. 6, no. 161 (M-151), 24.August 1982 & JP-A-57 075297 (SHINOSAWA YUSAKU), 11.Mai 1982,

## Beschreibung

Die Erfindung betrifft eine Vorrichtung zur Beseitigung eines beim Widerstandspreßschweißen erzeugten Stauchgrates bei der Herstellung von metallischen Felgenbandagen gemäß dem Oberbegriff des Patentanspruches 1.

Bei der Herstellung von metallischen Felgenbandagen entsteht beim Widerstandspreßschweißen des zu einem Rohrschuß gebogenen Bleches ein mehr oder weniger großer Stauchgrat. Die Größe dieses Stauchgrates ist abhängig von der Art des Schweißen, d.h. ob Abbrennstumpfschweißen oder Preß-Stumpfschweißen und vom Werkstoff, d.h. ob Stahl oder Leichtmetall. Im letzteren Fall ist der Stauchgrat besonders groß, insbesondere was die radiale Erstreckung betrifft und der nachfolgende spanende Aufwand ist erheblich, um diesen Stauchgrat zu beseitigen. Bisher war es üblich, durch ein mehrfaches Hoben den Stauchgrat lagenweise abzutragen. Dabei kann es vorkommen, daß der Span sich stark rollt und die scharfkantigen Ränder die Werkstückoberfläche beschädigen. Dies ist insbesondere auf der späteren Felgenaußenseite in den meisten Fällen nicht tolerabel, zumal dieBeseitigung aufwendig von Hand durch Schleifen erfolgen und zugleich die dadurch mögliche unzulässige Wanddickenschwächung beachtet werden muß.

In der AU-B-450099 ist eine Vorrichtung zur Beseitigung des beim Widerstandspreßschweißen entstehenden Stauchgrates bei der Herstellung längsnahtgeschweißter Rohre offenbart. Die Vorrichtung besteht aus einem im Rohr anordnenbaren langgestreckten Entgratwerkzeug, das über eine damit verbundene Stange in Längsrichtung positionierbar ist. Die Führung im Rohr übernehmen mehrere am Entgratwerkzeug angeordnete Rollen, die sich auf der Innenwand des Rohres abstützen. Das eigentliche Werkzeug ist als Rollmesser ausgebildet, das an einem Halteblech befestigt ist, das wiederum lösbar mit dem Entgratwerkzeug verbunden ist. Das Rollmesser ist zweifach geneigt angeordnet, zum einem geneigt in bezug auf die Querschnittsebene und in bezug auf die den Stauchgrat einschließende Durchmesserebene. Diese zweifache Neigung wurde gewählt, damit das Rollmesser durch den Vorschub des Endlosstranges des Rohres in Rotation versetzt wird. Bei Schweißstraßen zur Herstellung längsnahtgeschweißter Rohre ist die Schweißleistung der zeitbestimmende Faktor, so daß die mit dem Entgratwerkzeug erzielbare Schneidleistung von untergeordneter Bedeutung ist. Wesentlicher ist die Standzeit des Rollmessers, da jedes Auswechseln zum Stillstand der Schweißstraße führt. Das Rollmesser ist in Form eines Kegelstumpfes ausgebildet, dessen Verjüngung in Richtung der Befestigung liegt.

In der JP-A-57-075297 ist die Herstellung eines Rades beschrieben. Ausgehend von einem Blechstreifen wird dieses zu einer runden Bandage geformt, deren beide Enden über ein Widerstandspreßschweißen stoffschlüssig miteinander verbunden werden. Nach Beseitigung des entstandenen Stauchgrates innen und außen wird die Felgenbandage auf die exakte Breite geschnitten. Anschließend wird die Innenseite poliert und nach mehreren Umformschritten die Felge hergestellt. Die endgültige Abmessung erhält die Felge durch einen Expanderprozeß. Die Oberflächen werden abschließend poliert und die Radfelge ist fertig.

Aufgabe der Erfindung ist es eine Vorrichtung zur Beseitigung eines beim Widerstandspreßschweißen erzeugten Stauchgrates bei der Herstellung von metallischen Felgenbandagen anzugeben, mit der in kurzer Taktzeit ohne Beschädigung der umgebenden Werkstückfläche der Stauchgrat entfernt wird.

Diese Aufgabe wird ausgehend vom Oberbegriff in Verbindung mit den kennzeichnenden Merkmalen des Anspruches 1 gelöst.

Im Unterschied zur Hobeltechnik erfolgt mit der erfindungsgemäßen Vorrichtung ein seitliches Einschneiden in den Stauchgrat, und zwar nur etwas oberhalb der umgebenden Werkstückoberfläche. Dabei wird der Umstand genutzt, daß der Stauchgrat an dieser Stelle nur einen verhältnismäßig schmalen Steg aufweist. Durch das seitliche Einschneiden rollt der Span nicht mehr auf und die bekannten Beschädigungen auf der umgebenden Werkstoffoberfläche werden dadurch vermieden. Die eingesetzten Werkzeuge sind als stehende Messer oder als Rollmesser ausgebildet, die an in Längsrichtung des Stauchgrates verfahrbaren Werkzeugträgern befestigt sind. Um das Einschneiden bei den stehenden Messern zu erleichtern, ist die in Schneidrichtung liegende Schneidkante in bezug auf die Längsrichtung schräg gestellt und der Querschnitt senkrecht dazu ist keilförmig. Das letztgenannte Merkmal gilt auch für die Rollmesser. Zur Unterstützung des Einschneidens weisen die Klemmbacken auf der Klemmseite eine dem Stauchgrat zugewandte messerförmige Nase auf.

Anhand zweier Ausführungsbeispiele wird die Erfindung nähererläutert.
Es zeigen:
- Figur 1: einen Querschnitt durch eine erste Ausführungsform der Vorrichtung
- Figur 2: einen Schnitt A-A in Figur 1
- Figur 3: einen Querschnitt durch eine zweite Ausführungsform.

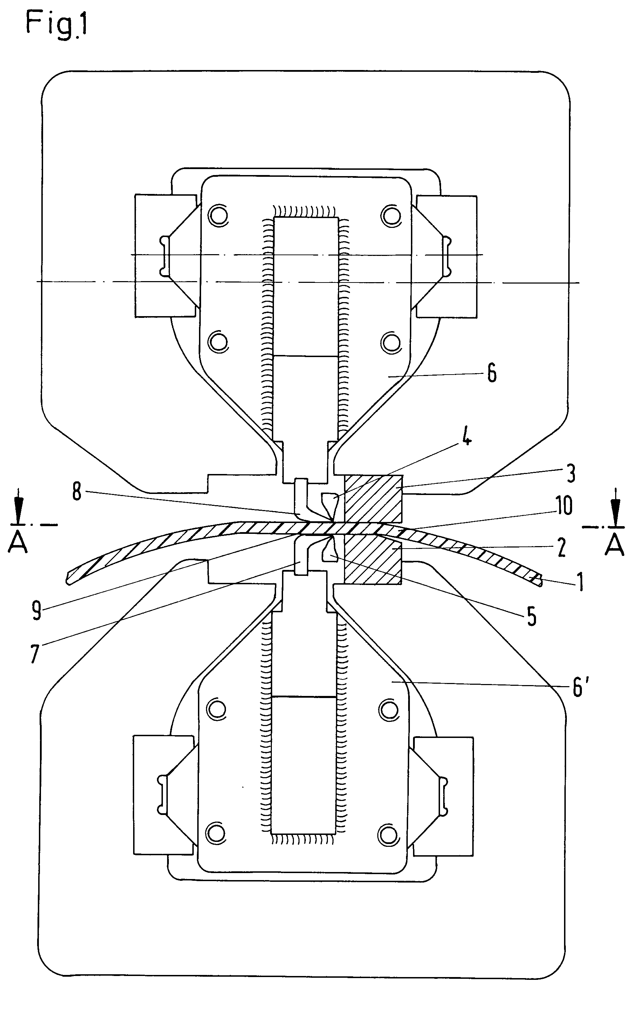

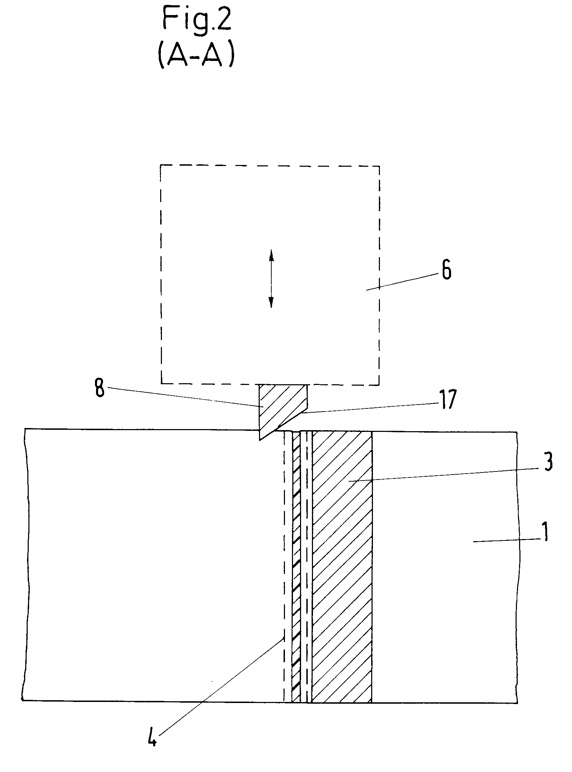

In den Figuren 1 und 2 ist ein Teil einer Felgenbandage 1, zwischen einem Klemmbackenpaar 2, 3 eingespannt. Etwas übertrieben dargestellt ist der beim Widerstandspreßschweißen entstandene Stauchgrat 4, 5 oberhalb und unterhalb des Werkstückes 1. An je einem Werkzeugträger 6, 6' ist ein Messerpaar 7, 8 befestigt. Die Werkzeugträger 6, 6' sind, wie in Figur 2 zu erkennen ist, in Längsrichtung des Stauchgrates 4, 5 verfahrbar. Die Messer 7, 8 sind so ausgebildet, daß sie im Querschnitt gesehen eine Keilform aufweisen und die in Schneidrichtung liegende Schneidkante 17 eine Schräge aufweist. Diese Form einer Anordnung der Messer 7, 8 erleichtert das seitliche Einschneiden. In Figur 1 ist deutlich zu erkennen, daß der Einstich der Messer 7, 8 nur etwas oberhalb der umgebenden Werkstoffoberfläche 9, 10 erfolgt. Der verbleibende Überstand kann in einem nachgeschalteten Verfahren beispielsweise weggehobelt werden. Auf der späteren Felgenaußenseite ist in jedem Fall eine glatte Oberfläche erforderlich, damit der Reifen ohne Probleme aufgezogen werden kann. Weiterhin muß im Reifensitzbereich eine saubere Anlage an der Innenseite des Felgenraumes sichergestellt werden, um bei den überwiegend schlauchlos aufgezogenen Reifen die Dichtheit zu gewährleisten. Auf der Felgeninnenseite kann je nach Anforderung der verbleibende Überstand stehenbleiben.

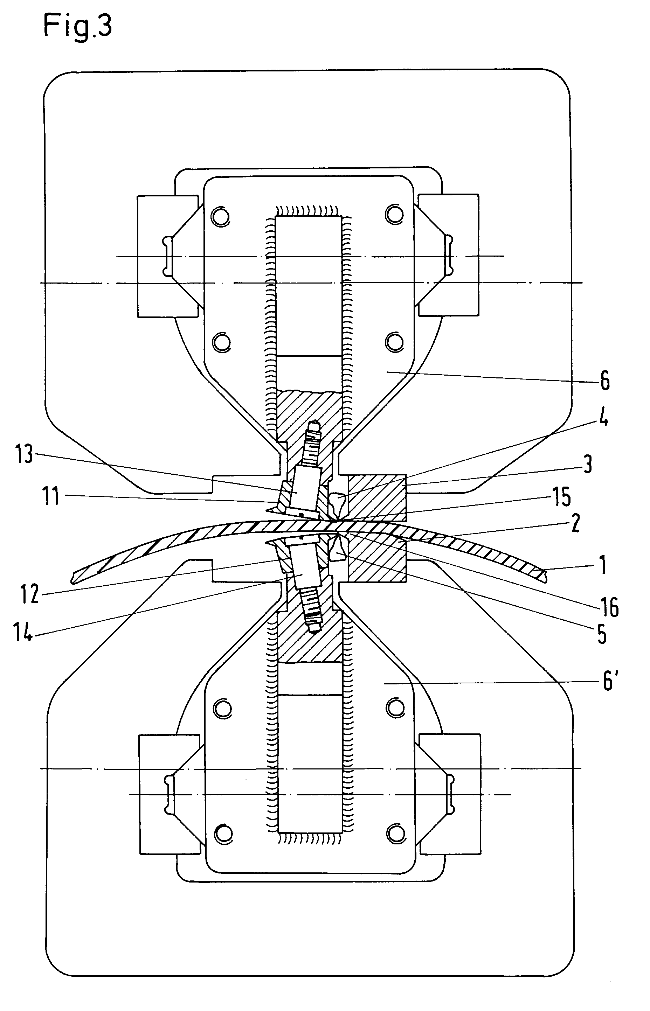

Figur 3 zeigt im gleichen Querschnitt wie in Figur 1 eine zweite Ausführungsform der erfindungsgemäßen Vorrichtung, wobei für gleiche Teile gleiche Bezugszeichen verwendet worden sind.

Im Unterschied zur Ausführungsform in Figur 1 sind hier statt der stehenden Messer 7, 8 Rollmesser 11,12 am verfahrbaren Werkzeugträger 6, 6' befestigt. Die Achsen 13, 14 der Rollmesser 11, 12 stehen schräg zur Achse der Werkzeugträger 6, 6'. Durch diese Schrägstellung wird auf der dem Stauchgrat 4, 5 abgewandten Seite ein Freiraum erzeugt, der eine ungehinderte Abrollbewegung der Rollmesser 11, 12 sicherstellt. Vergleichbar wie die stehenden Messer weisen die Rollmesser 11, 12 im Schneidbereich einen keilförmigen Querschnitt auf. Zur Unterstützung des seitlichen Einschneidens weisen die Klemmbacken 2, 3 auf der dem Stauchgrat 4, 5 zugewandten Seite je eine Nase 15, 16 auf, die im Querschnitt keilförmig ausgebildet sind.

## Patentansprüche

1. Vorrichtung zur Beseitigung eines beim Widerstandspreßschweißen erzeugten Stauchgrates (4,5) bei der Herstellung von metallischen Felgenbandagen (1) mit mindestens einer Klemmvorrichtung (2,3) für das Werkstück und einem in Längsrichtung des Stauchgrates (4,5) verfahrbaren Werkzeugträger (6,6'), auf dem ein je oberhalb und unterhalb des Werkstückes angeordnetes spanabhebendes Werkzeug (7,8, 11,12) befestigt ist,
dadurch gekennzeichnet,
daß das Werkzeug ein Scheidmesser (7,8) ist, das in Schneidrichtung eine zur Längsrichtung schrägstehende Schneidkante (17) und senkrecht zur Längsrichtung einen keilförmigen Querschnitt aufweist, wobei das Einschneiden in den Stauchgrat (4,5) nur etwas oberhalb der umgebenden Werkstückoberfläche erfolgt.

2. Vorrichtung nach Anspruch 1
dadurch gekennzeichnet,
daß das Schneidmesser als Rollmesser (11,12) ausgebildet ist und die Klemmbacken (2,3) auf der Klemmseite je eine den Stauchgrat (4,5) zugewandte messerförmige Nase (15,16) aufweisen.

## Claims

1. A device for removing an upset burr (4, 5) produced during resistance pressure welding in the production of metallic rim bands (1), having at least one clamping device (2, 3) for the workpiece and a tool holder (6, 6') movable in the longitudinal direction of the upset burr (4, 5), on which holder a metal-cutting tool (7, 8, 11, 12) located in each case above and below the workpiece is fastened,
characterised in that
the tool is a cutting blade (7, 8) which has a cutting edge (17) inclined relative to the longitudinal direction in the direction of cutting and a wedge-shaped section at right-angles to the longitudinal direction, the cutting into the upset burr (4, 5) being effected only somewhat above the surrounding workpiece surface.

2. A device according to Claim 1, characterised in that the cutting blade is designed as a rolling blade (11, 12) and the clamping jaws (2, 3) on the clamping side each have a blade-shaped projection (15, 16) facing the upset burr (4, 5).

## Revendications

1. Dispositif pour éliminer une bavure de refoulement (4,5) engendrée lors d'un soudage par effet Joue avec pression, lors de la réalisation de garnitures de jante (1) métalliques, comportant au moins un dispositif de serrage (2,3) pour la pièce et un support d'outil (6,6') mobile en direction longitudinale de la bavure de refoulement (4,5), sur lequel sont fixés des outils (7,8,11,12) d'enlèvement de copeaux, agencés respectivement au-dessus et au-dessous de la pièce,
caractérisé en ce que l'outil est un couteau (7,8) qui comporte, en direction de coupe, un bord de coupe (17) incliné par rapport à la direction longitudinale et, perpendiculairement à la direction longitudinale, une section transversale conique, l'entaillage dans la bavure de refoulement (4,5) étant réalisé uniquement un peu au-dessus de la surface périphérique de la pièce.

2. Dispositif selon la revendication 1,
caractérisé en ce que le couteau est réalisé sous forme d'un couteau de roulement (11,12) et les mâchoires de serrage (2,3) comportent, sur la face de serrage, à chaque fois une saillie (15,16) en forme de lame, en regard de la bavure de refoulement (4,5).
